# EUROPEAN PATENT APPLICATION

(11) **EP 1 295 714 A2**
(43) Date of publication of application: **26.03.2003**
(21) Application number: 02020813.8
(22) Date of filing: 17.09.2002
(51) Int. Cl.: B32B 31/20

(54) **Lamination apparatus**

(30) Priority: 19.09.2001 GB 0122581
(71) Applicant: Acco-Rexel Group Services Limited, Buckinghamshire HP19 3DT (GB)
(72) Inventor: Aries, Paul Arthur, Brierley Hill, West Midlands DY5 3Yf (GB)
(74) Representative: Lally, William

(57) **Abstract**

A lamination apparatus, for applying a thin plastic film (12) to a base material (14) comprises a single roller and a plate (18), between which the film and the base material are drawn, the plastic film being heated prior to or during passage through the gap between the roller and the plate, to cause the plastic film to be adhered to the base material. The laminate (11) then passes between exit plates (22, 24) to compress the film and the base material, to iron and cool the laminate.

## Description

### Description of Invention

This invention relates to lamination apparatus which may be used in a variety of fields to apply a thin film to a base material, typically a piece of paper, photographic material or card, or to secure such a base material between two layers of such film.

In conventional laminators the film and the base material are pressed between two laminating rollers to adhere them together. Existing laminators are large, bulky pieces of equipment that often are part of a production line and would, in any case, take up considerable space in an office. Therefore lamination services are usually provided by specialist print rooms or businesses.

There is a need for a smaller laminator that fits on a desktop, and may be used routinely in the office.

There is disclosed in EP-A-0270810 an apparatus for laminating a monolithic sheet and a glass fibre reinforced plastic sheet, in which the sheets are laid on a metal base plate, are heated and a roller is utilised to laminate the two sheets together, with the sheets remaining stationary on the base, and the roller passing over the sheets and pressing them against the base plate.

Such apparatus cannot easily however be utilised in speedy, particularly automatic production of laminated materials.

According to this invention, there is provided a lamination apparatus for applying a plastics film to a base material comprising a single laminating roller and a co-operating plate-like element mounted adjacent to the roller, in which the base material and the film are moved through the apparatus between the laminating roller and the co-operating element.

Preferably the apparatus comprises drive means to cause the plastics film and the base material to pass between the laminating roller and the co-operating element, preferably being operative to cause the laminating roller to rotate.

Preferably the co-operating element, or at least an operative face thereof, is provided with a non-stick coating, such as PTFE, to permit smooth passage of the material.

Preferably heating means is provided to heat the materials as they pass between the roller and the co-operating element, which is preferably in the form of means to heat the roller, and/or means to heat the co-operating element. Alternatively, or in addition, radiant means may be provided to heat the materials as they move into the gap between the laminating roller and the co-operating element.

Advantageously, means is provided to move the roller and the co-operating element towards one another, preferably resilient means whereby a compressive force may be provided to the material passing through the apparatus, against a spring bias.

Preferably stop means is provided to limit movement between the roller and the co-operating element, particularly separative movement, and preferably the stop means is operative to provide a plurality of set positions, whereby the maximum separation between the laminating roller and the co-operating element may be predetermined.

Preferably the stop means also provides a limit to movement of approach between the laminating roller and the co-operating element.

Advantageously the lamination apparatus further comprises two exit guide plates between which the laminate passes, and a resilient element, the guide plates being urged towards each other by the resilient element. The exit guide plates provide a means for ironing out any bubbles formed in the laminate, and pressing the film firmly onto the base layer to assist the lamination process.

Conveniently the exit guide plates have an operative face which is coated with a non-stick material, and preferably are inclined towards each other, tapering towards the exit from the apparatus.

The lamination apparatus preferably further comprises a housing, on which the laminating roller, the co-operating element, and the exit guide plate are mounted. The housing may be shaped and sized to aid the propulsion of the laminated material through the apparatus. For example, the housing may be manufactured from vacuum or injection moulded plastics with appropriately shaped slits to guide the materials in and out of the laminator.

Preferably the apparatus comprises an entrance guide, conveniently in the form of a plate, mounted adjacent to an entrance area between the roller and cooperating element.

Preferably the lamination apparatus further comprises two side frames mounted in the housing on which the laminating roller, the heated plate, the heater shroud, the entrance and the exit guide plates are mounted, and in such lamination apparatus these elements each connect the two side frames, and the lamination roller and the entrance and exit plates are mounted on bearings. These side frames increase the stability of the lamination apparatus.

In such lamination apparatus the lamination roller advantageously comprises a metal cylindrical shell covered with a resilient material, the heated plate advantageously comprises a metal plate and a heating element, and the roller is fixed in the housing.

The entrance guide plate of the lamination apparatus is also preferably coated with a non-stick material.

Preferably the lamination apparatus further comprises a temperature sensitive switch, which controls the movement of the base material and the laminate through the apparatus. This is preferably a cut off switch but could comprise a closed loop temperature control system.

According to this invention there is also provided a method of laminating a laminate layer to a base material comprising: feeding a base material and a laminate layer into apparatus of the kind set out above, and withdrawing the laminated product from it.

In this method the base material may conveniently be photographic material, paper or card, and may be of different shapes and sizes, but are conveniently a set size, such as A3 or A4 size.

A preferred embodiment of lamination apparatus, selected purely by way of example, will now be described, with reference to the following drawings in which
FIGURE 1 shows schematically a preferred embodiment of a lamination apparatus;
FIGURE 2 shows schematically an exploded perspective view of the preferred embodiment;
FIGURE 3 shows in more detail a side frame of the embodiment of Figure 2; and
FIGURE 4 shows schematically a front view of the lamination apparatus in its housing.

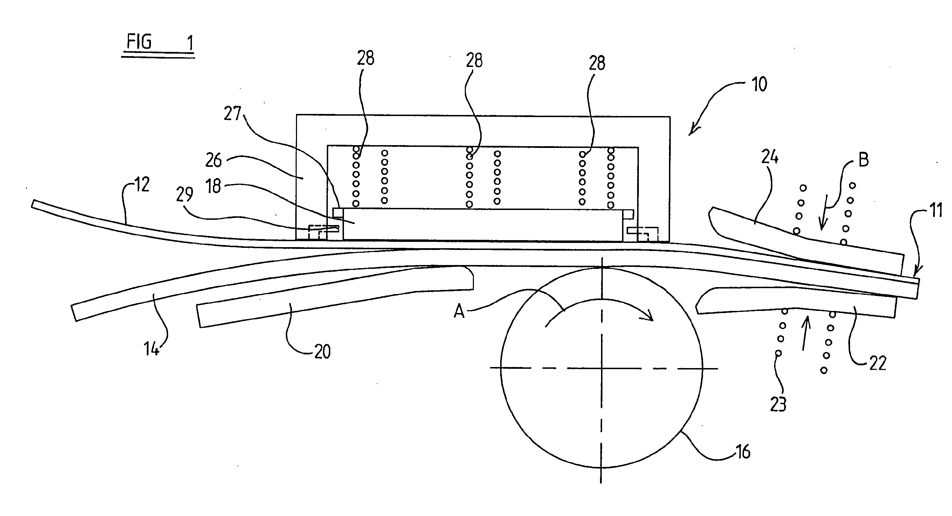

Lamination apparatus 10 is shown generally in Figure 1. A laminate 11, typically comprising a plastic film 12 and a base material 14 to which the film is to be applied may be moved between a roller 16 and a heater plate 18. They are driven through the apparatus by the clockwise rotation of the roller, shown by A and about its axis X. Heat is applied by the heated plate 18 at the point of compression.

To assist the passage of the laminate through the apparatus three metal plates, specifically an entrance guide plate 20, and two exit plates 22, 24 are arranged at opposite sides of the roller 16 and the plate 18. The entrance guide plate 20 ensures that the base material and film travels smoothly to and between the roller and the heated plate. The exit guide plates 22, 24 compress the film and the base material together after heating, and iron and cool the laminate, enabling a smooth finish to be provided. The leading part of each of the exit plates 24 is tapered to guide the laminate between them.

Along most of their length however, the plates are generally parallel to each other and press a large surface area of the laminate for effective ironing and cooling of it. A heater shroud 26 covers the heated plate and prevents easy access to its hot surface.

The heated plate 18 is mounted on the shroud by springs 28. In addition a stop 27 is arranged on the heated plate, and a cooperating stop 29, which may be adjustable into a selected pre-set position, is arranged on the heater shroud. The heater springs press the heated plate against the plastics film in normal operation of the apparatus, whilst the stops 27, 29 prevent the heated plate protruding from the shroud.

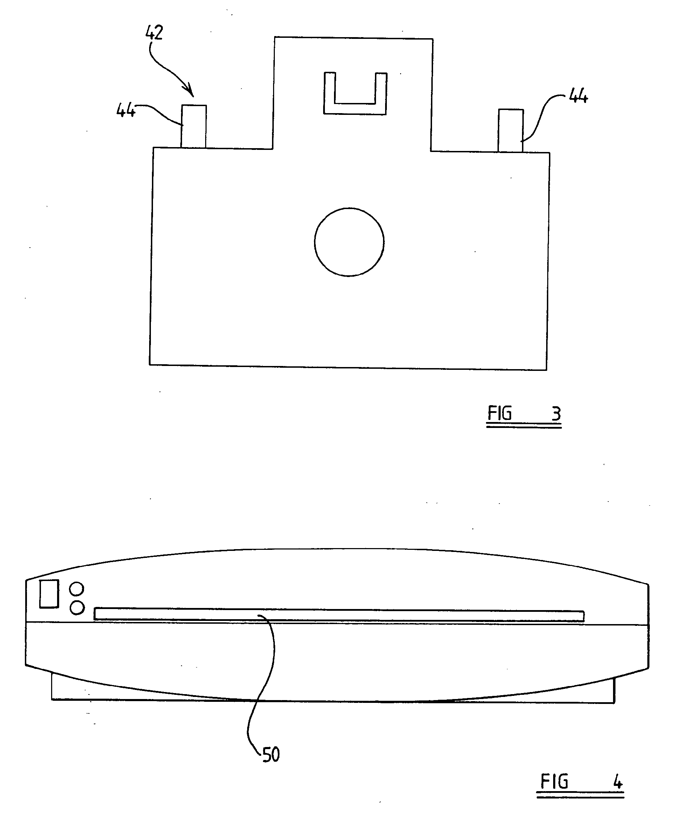

The components of the lamination apparatus are mounted between two plastic side frames 42, 44 shown in more detail in Figure 3. The heater shroud 26 clips onto the two plastic side frames using separate clips (not shown). The entrance plate and the two exit plates are held on the side frames by posts 44. A resilient sleeve 46 fits over each post between the two exit guide plates, in order to spring the two guide plates lightly apart. The rest of the components also clip onto appropriate mountings on the side frames.

The roller 16 comprises a central steel shaft 54 and a vulcanised rubber outer layer 52, a drive motor 56 for the roller being moulded on one of the frames 42 by pins 58.

The entry and exit guide plates are coated with a non-stick material, such as Teflon®, which extends along the length of the plate and through which the base material, the plastics film and the laminate pass.

In this embodiment the position of the roller is fixed and it gives an appropriate amount of compression for laminating a plastic material which is approximately 150 microns thick to paper or card.

Preferably the apparatus comprises temperature control means, to maintain a desirable, conveniently pre-set, operating temperature of the apparatus, preferably also comprising means to prevent operation of the machine until the temperature sensor indicates that an operating temperature has been achieved. Otherwise the motor drives the roller directly at around 4 to 5 revolutions per minutes at a fixed temperature after approximately a 3 to 4 minute warm up time.

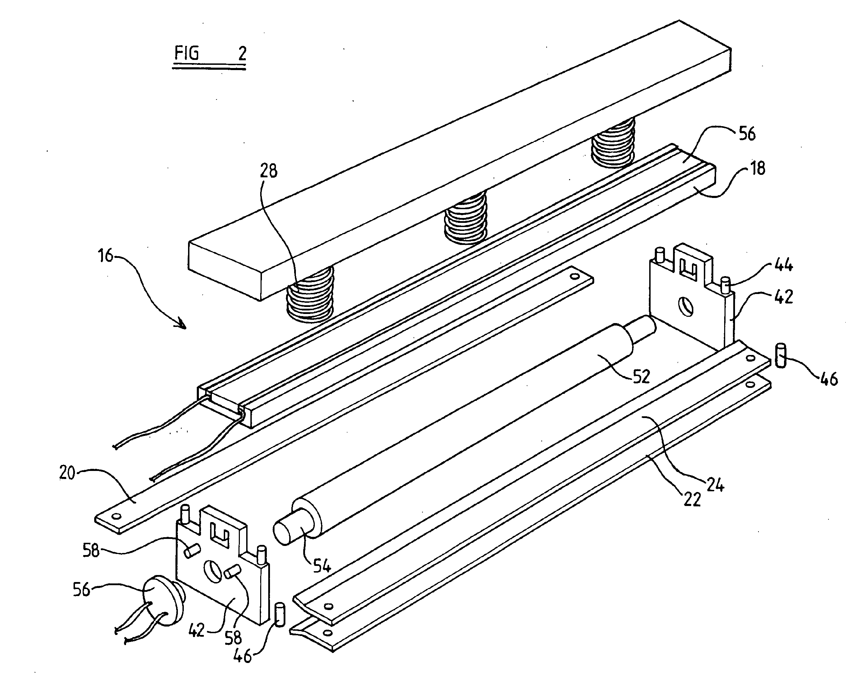

Figure 4 shows a side view of the embodiment of Figure 2 and 3 with the housing, made of a vacuum moulded plastic, surrounding the components of the device. Control switches and various indicators are also shown, and an entrance slot 50 is provided for insertion into the apparatus.

Whilst the invention has been described above in relation to the lamination of a sheet of base material to a single sheet of plastics film, it will be appreciated that the base material may conveniently be laminated between two films of plastics material.

In the present specification "comprises" means "includes or consists of" and "comprising" means "including or consisting of'.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. Lamination apparatus for applying a plastics film (12) to a base material (14) comprising a single laminating roller (16) and a co-operating plate-like element (18) mounted adjacent to the roller, in which the base material (14) and the film (12) are moved through the apparatus between the laminating roller (16) and the co-operating element (18).

2. Apparatus according to claim 1 comprising drive means (56) to cause the plastics film and the base material to pass between the laminating roller (16) and the co-operating element (18).

3. Apparatus according to claim 1 wherein the drive means (56) is operative to cause the laminating roller to rotate, to cause the plastics film and the base material to pass through the apparatus.

4. Apparatus according to any one of the preceding claims wherein the co-operating element (18) is provided with a non-stick coating on an operative face thereof.

5. Apparatus according to any one of the preceding claims wherein the roller and/or the co-operating element is heated.

6. Apparatus according to any one of the preceding claims comprising resilient means (28) to move the roller and the co-operating element towards one another.

7. Apparatus according to any one of the preceding claims comprising two exit plates (23,24) between which the laminate passes from the laminating roller (16) and the co-operating element (18).

8. Apparatus according to claim 7 comprising means (23) to urge the two exit plates towards one another.

9. Apparatus according to one of claims 7 and 8 wherein the exit plates (22,24) are outwardly flared, to assist entry therebetween the base material and the film as it passes from the laminating roller and the operating element.

10. Apparatus according to any one of the preceding claims comprising an entrance guide (20) mounted adjacent to the entrance between the roller (16) and the co-operating element (18).

11. Apparatus according to any one of the preceding claims wherein the laminating roller comprises a cylindrical metal shell covered with a resilient material.

12. Apparatus according to any one of the preceding claims comprising a heater shroud (26).

13. A method of laminating a laminate layer to a base material comprising feeding a base material and a laminate layer into apparatus according to any preceding claim, and withdrawing the laminated product.

14. A method according to claim 13 in which the base material is paper, photograph or card, and the base material comprises one or two sheets of plastic film.
